(19) Europäisches Patentamt
European Patent Office
Office européen des brevets

(11) **EP 1 975 040 B1**

(12) **EUROPÄISCHE PATENTSCHRIFT**

(45) Veröffentlichungstag und Bekanntmachung des Hinweises auf die Patenterteilung:
**28.10.2009 Patentblatt 2009/44**

(51) Int Cl.:
***B62D 5/04*** *(2006.01)*

(21) Anmeldenummer: **07105294.8**

(22) Anmeldetag: **30.03.2007**

(54) **Verfahren zur Detektion periodischer Störungen in der Lenkeinrichtung eines Kraftfahrzeuges sowie Verfahren zur Kompensation derartiger Störungen**

Method for detecting periodic disturbances in the steering device of a motor vehicle and method for compensating for such disturbances

Procédé de détection de perturbations périodiques dans le système de direction d'un véhicule automobile, tout comme procédé destiné à la compensation de telles perturbations

(84) Benannte Vertragsstaaten:
**DE FR GB**

(43) Veröffentlichungstag der Anmeldung:
**01.10.2008 Patentblatt 2008/40**

(73) Patentinhaber: **Ford Global Technologies, LLC
Dearborn, MI 48126 (US)**

(72) Erfinder:
• **Wey, Torsten
47447 Moers (DE)**
• **Engels, Frank Peter
42653 Solingen (DE)**
• **Hamel, Jörg
76829 Landau (DE)**

(74) Vertreter: **Drömer, Hans-Carsten
Ford-Werke Aktiengesellschaft
Patentabteilung NH/DRP
Henry-Ford-Strasse 1
50725 Köln (DE)**

(56) Entgegenhaltungen:
EP-A- 1 061 640        EP-A- 1 759 956
DE-A1- 10 358 494      JP-A- 2004 161 073
US-A- 5 155 422

**Beschreibung**

Die vorliegende Erfindung betrifft ein Verfahren zur Detektion periodischer Störungen in der Lenkeinrichtung eines Kraftfahrzeugs mit einer Ermittelung einer Geschwindigkeit des Kraftfahrzeugs und mit einer Ermittelung eines zeitlichen Verlaufs einer Lenkkraft und/oder eines Lenkmoments. Ferner betrifft die Erfindung ein Verfahren zur Kompensation derartiger detektierter periodischer Störungen bei einem Kraftfahrzeug mit einer fremdunterstützten Lenkeinrichtung. Ferner betrifft die Erfindung eine Vorrichtung zur Durchführung der genannten Verfahren.

Bei Kraftfahrzeugen können verschiedene periodische Störungen in der Lenkeinrichtung auftreten, insbesondere durch schlecht ausgewuchtete Vorderräder oder durch Dickenvariation der Bremsscheiben. Solche periodischen Störungen machen sich am Lenkrad durch eine als unangenehm empfundene Lenkungsunruhe bemerkbar.

Eine fortdauernde Bedämpfung der Störungen durch entsprechende Einstellung der Fremdkraftunterstützung der Lenkeinrichtung kann zwar vorgenommen werden, hat aber einen negativen Einfluß auf das Lenkgefühl. Da die Störungen zyklisch auftreten, wird angestrebt, eine zusätzliche Dämpfung des Lenksystems nur dann zu aktivieren, wenn eine Störung auch wirklich auftritt.

Aus der JP 2004161073 ist ein Verfahren zum Betrieb einer elektromechanisch unterstützten Lenkeinrichtung bekannt. Bei diesem Verfahren soll dem Fahrer eine Rückmeldung über ungewöhnliche Schwingungen in der Lenkeinrichtung gegeben werden. Zu diesem Zweck werden eine Fahrzeuggeschwindigkeit und ein Lenkmoment der Lenkeinrichtung ermittelt. Anschließend wird mit Hilfe einer Hochgeschwindigkeits-Fourier-Transformation aus dem Lenkmomentenverlauf ein Frequenzspektrum erzeugt, das auf Maximalamplituden hin untersucht wird. Die gefundenen Maximalamplituden werden zur Ermittlung einer Störungsfrequenz genutzt, die ihrerseits mittels einer Bewertungseinrichtung auf das Vorliegen einer Störung hin untersucht wird. Nachteilig an dem bekannten Verfahren ist, daß über einen größeren Frequenzbereich hinweg durchzuführende Hochgeschwindigkeits-Fourier-Transformationen mit einem hohen Rechenaufwand verbunden sind, so daß die Mikroprozessorsysteme des Fahrzeugs stark belastet werden.

Die Aufgabe der vorliegenden Erfindung besteht darin, ein Verfahren zur Detektion und optional auch zur Kompensation periodischer Störungen in der Lenkeinrichtung eines Kraftfahrzeuges sowie eine entsprechende Vorrichtung zur Durchführung des Verfahrens bereitzustellen, das bzw. die eine robuste Ermittlung von Störungen in der Lenkeinrichtung mittels einer geringen Rechenleistung ermöglichen.

Diese Aufgabe wird durch Verfahren gemäß den Ansprüchen 1 bzw. 9 und durch eine Vorrichtung gemäß dem Anspruch 10 gelöst.

Vorteilhafte Weiterbildungen der Erfindung sind Gegenstand von Unteransprüchen.

Erfindungsgemäß ist vorgesehen, zur Detektion periodischer Störungen in der Lenkeinrichtung eine geschwindigkeitsabhängige Zielfrequenz zu ermitteln und anhand der ermittelten Zielfrequenz eine Fourier-Analyse des zeitlichen Verlaufs der Lenkkraft und/oder des Lenkmoments durchzuführen. Dabei werden einer oder mehrere Frequenzbereiche bei der Fourier-Analyse nicht berücksichtigt, wobei die Ober- und/oder die Untergrenze dieses Frequenzbereichs oder dieser Frequenzbereiche von der geschwindigkeitsabhängigen Zielfrequenz abhängen. Hierdurch wird die benötigte Rechenzeit bzw. Rechenleistung reduziert.

Besonders bevorzugt wird die Fourier-Analyse ausschließlich bei der geschwindigkeitsabhängigen Zielfrequenz (1. Ordnung) und/oder einem oder mehren Vielfachen (höhere Ordnungen) dieser Frequenz durchgeführt. Dies bedeutet für die bei der Fourier-Analyse ausgesparten Bereiche, daß - beispielsweise für den Fall, daß die erste und zweite Ordnung der Zielfrequenz berücksichtigt werden sollen - die Fourier-Analyse im Bereich [0, Zielfrequenz[ und ]Zielfrequenz, 2* Zielfrequenz[ sowie ]2*Zielfrequenz, "∞"[ nicht durchgeführt wird. Hierdurch kann die Berechnung erheblich vereinfacht werden.

Das erfindungsgemäße Verfahren ermöglicht eine Störungserkennung mit einem vergleichsweise geringen Rechenaufwand, so daß ein solches Verfahren in den üblichen Steuergeräten für fremdkraftunterstützte Lenkeinrichtungen, insbesondere für elektrisch unterstützte Lenkeinrichtungen, implementiert werden kann.

Die zu detektierenden unerwünschten Störungen werden durch periodische Kräfteschwankungen in der Lenkeinrichtung verursacht und sind von der Umlaufgeschwindigkeit der Vorderräder des Kraftfahrzeugs und somit von der Fahrzeuggeschwindigkeit abhängig. Zur Detektion einer periodisch auftretenden Störung wird zunächst das Lenkmoment, insbesondere von einem in der Lenksäule des Kraftfahrzeugs integrierten Drehmomentsensor, oder die Lenkkraft, insbesondere durch einen Spurstangenkraftsensor, ermittelt. Außerdem wird die Geschwindigkeit des Kraftfahrzeugs mit einem entsprechenden Sensor ermittelt. Anhand der ermittelten Geschwindigkeit, d. h. aus der Umlaufgeschwindigkeit der Vorderräder, kann die Zielfrequenz für die Fourier-Analyse berechnet werden.

In Ausgestaltung der Erfindung ist vorgesehen, daß die Amplitude des zeitlichen Verlaufs der Lenkkraft und/oder des Lenkmoments bei der Zielfrequenz (oder einem Vielfachen der Zielfrequenz) ermittelt und über der Geschwindigkeit des Kraftfahrzeugs aufgetragen werden. An diese Meßwerte kann dann eine Modellkurve mit wenigstens einem Anpaßparameter angepaßt werden. Anhand des wenigstens einen angepaßten Parameters der Modellkurve können dann Rückschlüsse auf die Störungsursache gezogen werden und eventuell geeignete Maßnahmen zur Unterdrückung der Störung eingeleitet werden.

So kann z.B. bei einer Unwucht der Vorderräder eine Hilfskraftregelung der Lenkeinrichtung, vorzugsweise nur zu den Zeitpunkten der zyklisch auftretenden Störungen, auf einen Parametersatz mit höherer Dämpfung umgeschaltet werden.

Der vorstehend beschriebene Anpaßvorgang kann selbstverständlich grundsätzlich auch dann durchgeführt werden, wenn - wie im Stand der Technik bekannt - ein durchgängiges Fourier-Spektrum berechnet wurde; in diesem Falle werden dann lediglich die Amplituden bei der Zielfrequenz bzw. höherer Ordnung verwendet.

In weiterer Ausgestaltung der Erfindung ist vorgesehen, daß die Fourier-Analyse mit der Vereinfachung $\omega\tau=2\pi C$ $v(t)\tau\approx2\pi C\, s(\tau)$ für die beiden Integranden der Gleichungen

$$(1) \qquad a_k(t) = \frac{2}{T} \int_{t-T}^{t} T_c(\tau) \cdot \cos(k \cdot \omega\tau)\, d\tau$$

und

$$(2) \qquad b_k(t) = \frac{2}{T} \int_{t-T}^{t} T_c(\tau) \cdot \sin(k \cdot \omega\tau)\, d\tau$$

vorgenommen wird, die dadurch erheblich vereinfacht werden und damit schneller berechenbar sind. Die Vereinfachung basiert auf der Annahme, daß die Veränderung der Geschwindigkeit des Kraftfahrzeugs wesentlich kleiner als die Veränderung der durch die Störung hervorgerufenen Lenkkräfte oder Lenkmomente ist. Dabei bezeichnet $\omega$ die Kreisfrequenz [1/s], $\tau$ bezeichnet die Infinitesimalvariable, C ist der reziproke Radumfang eines Kraftfahrzeugrads [1/m], $v(t)$ ist die Momentangeschwindigkeit [m/s] des Kraftfahrzeugs, $k$ ist die Ordnung der zu betrachtenden Störung, $T_c(\tau)$ ist das gemessene momentane Lenkmoment [Nm].

In weiterer Ausgestaltung der Erfindung ist vorgesehen, daß eine Integration von Fourier-Koeffizienten durch eine Näherung nach dem Trapezverfahren vorgenommen wird, bei dem eine Anzahl von Stützstellen N gemäß der Gleichung $N=\lceil T_{max}/T_s \rceil = \lceil 1/(C \cdot v_{min} T_s) \rceil$ in Abhängigkeit von der Integrationszeit T [s], der Abtastzeit $T_s$ [s] und der maximalen Integrationszeit $T_{max}$ [s] gewählt wird. Bei dem Trapezverfahren handelt es sich um ein Approximationsverfahren, bei dem die Fläche unter einer Kurve durch mehrere, unter der Kurve angeordnete Trapeze angenähert wird. Dadurch wird eine schnelle und nur geringfügig ungenauere Flächenbestimmung erreicht. Durch die Anwendung des Trapezverfahrens kann somit eine weitere Vereinfachung der zur Ermittlung der periodischen Störungen vorzunehmenden Berechnungen erzielt werden.

In weiterer Ausgestaltung der Erfindung ist vorgesehen, daß eine Annäherung der über der Geschwindigkeit aufgetragenen Amplituden aus der Fourier-Analyse anhand einer Modellgleichung gemäß

$$(3) \qquad \hat{A}_k = a_k \cdot \sqrt{\frac{\Omega^2(1 + 4d_k^2 \cdot \Omega^2)}{(\Omega^2 - 1)^2 + 4d_k^2 \cdot \Omega^2}}$$

$$(4) \qquad \text{mit } \Omega = v(t_i)/v_k$$

vorgenommen wird.

Es hat sich gezeigt, daß die Parameter $v_k$ und $d_k$ für einen bestimmten Fahrzeugtyp unabhängig von der Störung im Wesentlichen konstant vorgegeben werden können. Dabei beschreibt $v_k$, bei welcher Geschwindigkeit die maximale Störung auftritt; $d_k$ beschreibt, wie schnell die Störung bei Verlassen des Maximalwerts abklingt. Diese Größen hängen maßgeblich von den dynamischen Eigenschaften des Lenksystems ab und sind somit vorgebbare, fahrzeugspezifische Parameter, die nicht berechnet oder in anderer Weise ermittelt werden müssen, sondern in einer Wertetabelle des Steuergeräts für die Lenkeinrichtung abgelegt sein können.

Der verbleibende Parameter $a_k$ wird gemäß einer vorteilhaften Ausgestaltung der Erfindung durch Vergleich mit den berechneten Störamplituden $A_k(t_i)$ mit einem LSQ-Schätzalgorithmus ermittelt. Der LSQ-Schätzalgorithmus (Least Squares with a Single Quadratic Constraint) ermöglicht eine rasche Ermittlung des Parameters $a_k$; insbesondere, weil der Parameter $a_k$ in der oben stehenden Gleichung (3) nur linear enthalten ist. Es ist jedoch alternativ auch denkbar, die Regression multidimensional durchzuführen und auch die nicht linearen Parameter $v_k$ und/oder $d_k$ aus den konkreten Meßwerten zu bestimmen. Für die bisher untersuchten Störungen sind diese Parameter zwar näherungsweise konstant, es sind aber durchaus Fälle denkbar, in denen einer der anderen Parameter direkt mit einem Störeinfluß korrelieren könnte.

Selbstverständlich können auch anders geartete Modellfunktionen verwendet werden.

Gemäß einem weiteren Aspekt der Erfindung ist eine Lenkeinrichtung mit Fremdkraftunterstützung vorgesehen, die ein Steuergerät enthält, das für die Durchführung eines Verfahrens nach einem der Ansprüche 1 bis 8 oder 9 eingerichtet ist. Eine derartige Lenkeinrichtung ist somit in der Lage, mit geringen Rechenaufwand periodisch / zyklisch auftretende Störungen zu identifizieren und kann dazu eingerichtet sein, in gleicher Weise periodisch eine Dämpfungscharakteristik für die Lenkunterstützung zu verändern, um einen vorteilhaften Kompromiß aus einer Bedämpfung der Störungen und einer ansonsten sehr gefühlvollen Lenkung zu bieten.

Die Erfindung wird nachfolgend anhand der Zeichnungen beispielhaft näher erläutert. Es zeigen:

Figur 1     ein Spektrogramm für periodisch auftretende Störungen in einer Lenkeinrichtung;

Figur 2     mehrere Kurvenverläufe errechneter und angenäherter Amplituden von periodisch auftretenden Störungen, und

Figur 3     ein Diagramm zur Erläuterung von Rechenoperationen, die im Rahmen des erfindungsgemäßen Verfahrens durchgeführt werden.

Das Verfahren zum Detektion von periodischen Störungen in der Lenkeinrichtung eines Kraftfahrzeugs kann hinsichtlich einer Ermittlung von periodisch auftretenden Störungen in zwei Teilverfahren unterteilt werden: Das erste Teilverfahren befaßt sich mit der Detektion der periodisch auftretenden Störungen. Das zweite Teilverfahren betrifft hingegen die Klassifikation der auftretenden Störungen.

Für das erste Teilverfahren wird zunächst die Geschwindigkeit des Kraftfahrzeugs, das heißt die Umlaufgeschwindigkeit der Vorderräder (ggf. durch Mittelung über die Werte zweier Vorderrad-Einzelraddrehzahlsensoren), ermittelt. Bei einem konventionellen Kraftfahrzeug werden die Vorderräder von der Lenkeinrichtung angesteuert und sind daher auch im Hinblick auf die Übertragung von Schwingungen eng mit dem Lenkrad des Kraftfahrzeugs gekoppelt. An den Vorderrädern vorliegende mechanische Unzulänglichkeiten wie Unwuchten oder verzogene Bremsscheiben führen somit im Fahrbetrieb des Kraftfahrzeugs nicht nur zu Schwingungen an den Vorderrädern, sondern auch zur Einkopplung dieser Schwingungen in die Lenkeinrichtung, insbesondere in das Lenkrad des Kraftfahrzeugs.

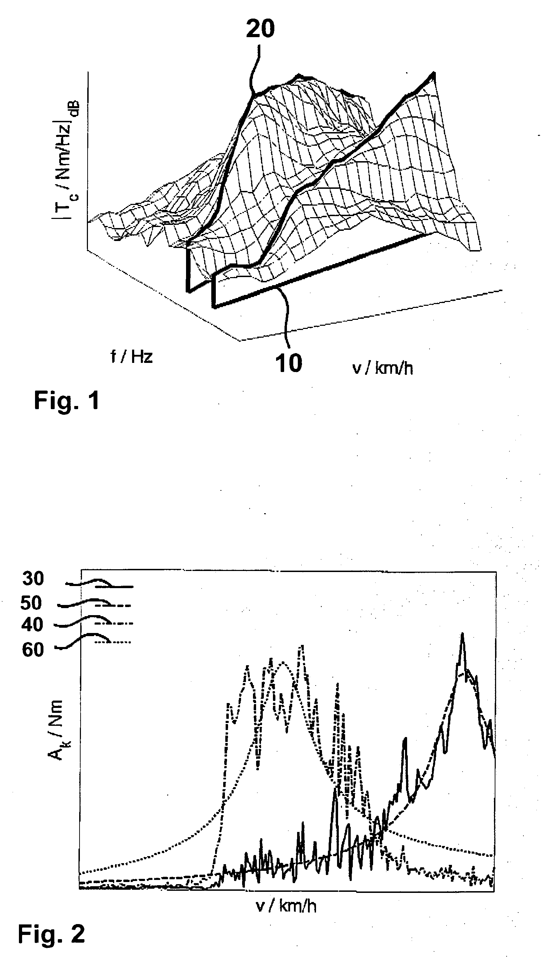

Somit kann anhand der Umlaufgeschwindigkeit der Vorderräder die relevante Störungsfrequenz ermittelt werden, die sich in dem in Figur 1 dargestellten Spektrogramm als Gerade 10 bzw. davon ausgehende, in vertikaler Richtung ausgerichtete Schnittebene für die Störungsfrequenz erster Ordnung bzw. 20 für die Störungsfrequenz zweiter Ordnung gemäß der Gleichung:

$$(1) \qquad f = k^* C^* v \quad [1/s]$$

darstellten läßt.

Dabei bezeichnet f die Frequenz [1/s], k die Ordnung der betrachteten Störung (k = 1 ... n) und C den reziproken Radumfang [1/m]. Da die Geschwindigkeit v(t) des Kraftfahrzeugs variiert, ist die zu ermittelnde Frequenz zeitabhängig, was in der Gleichung

$$(1.1) \qquad f(t) = C \cdot v(t)$$

zum Ausdruck kommt.

Für die Frequenz f(t) wird die Amplitude der Störung aus dem gemessenen Drehmoment: $T_c(t)$ [Nm] ermittelt. Für die Amplitudenermittlung werden zunächst die Fourier-Koeffizienten anhand der Gleichungen

$$(2.1) \qquad a_k(t) = \frac{2}{T} \int_{t-T}^{t} T_c(\tau) \cdot \cos(k \cdot \omega\tau)\, d\tau$$

und

$$(2.2) \qquad b_k(t) = \frac{2}{T} \int_{t-T}^{t} T_c(\tau) \cdot \sin(k \cdot \omega\tau)\, d\tau$$

ermittelt. Um eine schnellere Ermittlung der Fourier-Koeffizienten zu gewährleisten, wird die Annahme getroffen, daß die Veränderung der Geschwindigkeit des Kraftfahrzeugs wesentlich kleiner als die Veränderung der durch die Störung hervorgerufenen Lenkkräfte oder Lenkmomente ist. Unter dieser Annahme kann der Integrand in den vorstehenden Integralen (2.1 / 2.2) wie folgt modifiziert werden:

$$(3) \qquad \omega\tau = 2\pi C\, v(t)\tau \approx 2\pi C\, s(\tau)$$

wobei $\omega$ die Kreisfrequenz [1/s], $\tau$ die Infinitesimalvariable, C der reziproke Radumfang eines Kraftfahrzeugrads [1/m] und $v(t)$ die Momentangeschwindigkeit [m/s] des Kraftfahrzeugs ist.

Die mittlere Wegstrecke $s(\tau)$ [m] pro Meßzeitabschnitt $T_s$ [s] kann dann mit der Gleichung

$$(4.1) \qquad s(t_i) \approx s(t_{i-1}) + T_s\, \frac{v(t_i) + v(t_{i-1})}{2}$$

ausgedrückt werden, aus der sich mit der Gleichung

$$(4.2) \qquad y_c(t_i) = T_c(t_i) \cdot \cos\big(k\, 2\pi C\, s(t_i)\big)$$

der erste Koeffizient der Fourier-Analyse wie folgt annähern läßt:

$$(4.3) \qquad a_k(t_i) \approx \frac{2}{N}\left( \frac{y_c(t_i)}{2} + \sum_{j=1}^{N-1} y_c(t_{i-j}) + \frac{y_c(t_{i-N})}{2} \right)$$

Für den zweiten Fourier-Koeffizienten werden die entsprechenden Gleichungen:

$$(4.4) \qquad y_s(t_i) = T_c(t_i) \cdot \sin\big(k\, 2\pi C\, s(t_i)\big)$$

$$(4.5) \qquad b_k(t_i) \approx \frac{2}{N}\left( \frac{y_s(t_i)}{2} + \sum_{j=1}^{N-1} y_s(t_{i-j}) + \frac{y_s(t_{i-N})}{2} \right)$$

genutzt.

Die Integration wird mittels der Trapezregel mit einer festen Anzahl von N Stützstellen vorgenommen. Die Anzahl der Stützstellen N wird wie folgt ermittelt:

$$(5) \qquad N = \left\lceil T_{\max} / T_s \right\rceil = \left\lceil 1/(C \cdot \mathrm{v}_{\min} \, T_s) \right\rceil$$

wobei gilt:

$$\text{Integrationszeit } T = 1/f = 1/(C \cdot \mathrm{v}(t)) \;\; [\mathrm{s}]$$

Abtastzeit $T_s$ [s]

$$\text{maximale Integrationszeit } T_{\max} = 1/(C \cdot \mathrm{v}_{\min}) \;\; [\mathrm{s}]$$

$\mathrm{v}_{\min}$ = Minimalgeschwindigkeit, für die Störungen noch detektiert werden sollen [m/s]

Aus den vorstehenden Gleichungen kann nunmehr die Amplitude k-ter Ordnung der Störung für die entsprechende Frequenz berechnet werden:

$$(6) \qquad A_k(t_i) = \sqrt{\left| a_k(t_i) \right|^2 + \left| b_k(t_i) \right|^2}$$

Diese Näherungen bewirken, daß man die Multiplikation mit Sinus und Kosinus quasi vorab mit der jeweils aktuellen Frequenz durchführen kann; man hat so nur noch eine Kosinus- und eine Sinusfunktion für einen Zeitschritt zu berechnen. Ohne diese Näherung müßte in jedem Zeitschritt die Kosinus- und Sinusfunktion für alle zurückliegenden Frequenzwerte berechnet werden. Gegenüber einer vollständigen Fourier-Analyse kann der Rechenaufwand durch die vorgenannten Näherungen typischerweise um den Faktor hundert verringert werden.

Die Amplituden erster und zweiter Ordnung sind in der Figur 2 als Linienzüge 30 und 40 aufgetragen.

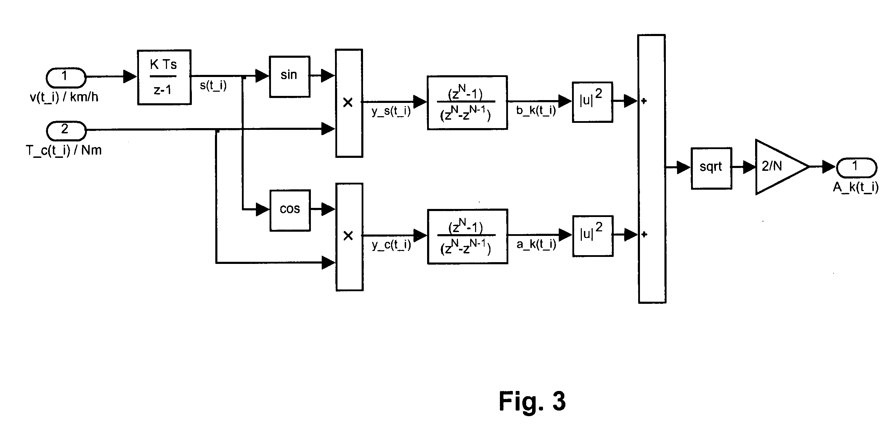

In Fig. 3 ist eine mögliche Implementierung der Rechenvorschriften gemäß den Gleichungen 4.1 bis 4.5, 5 sowie 6 in einer Simulink-Darstellung gezeigt (Simulink ist eine eingetragene Marke der The MathWorks, Inc., Natick, Massachusetts, USA).

Anschließend an die Berechnung der Amplituden erfolgt im Rahmen eines zweiten Teilverfahrens eine Annäherung des geschwindigkeitsabhängigen Amplitudenverlaufs der Störung anhand einer geeigneten Näherungs- oder Modellgleichung, beispielsweise mit:

$$(7.1) \qquad \Omega = \mathrm{v}(t_i) / \mathrm{v}_k$$

$$(7.2) \qquad \hat{A}_k = a_k \cdot \sqrt{\frac{\Omega^2 (1 + 4 d_k^2 \cdot \Omega^2)}{(\Omega^2 - 1)^2 + 4 d_k^2 \cdot \Omega^2}}$$

wobei $v_k$ beschreibt, bei welcher Geschwindigkeit die maximale Störung auftritt (fahrzeugspezifisch, aber konstant); $d_k$ beschreibt, wie schnell die Störung bei Verlassen des Maximalwerts abklingt (fahrzeugspezifisch, aber konstant) und $a_k$ aus der Störamplitude $A_k(t_i)$ gemäß Gleichung 6 ermittelt wird. Modellkurven für die Annäherung der Amplituden erster und zweiter Ordnung sind als Linienzüge 50 und 60 in Figur 2 aufgetragen.

Wird beispielsweise nur die erste Ordnung der Störung betrachtet, so ist der Parameter $a_1$ der obigen Modellgleichung linear mit der Unwucht an einem Vorderrad korreliert, so daß man diese Störung direkt an $a_1$ erkennen kann.

Das vorstehend beschriebene Verfahren unterscheidet sich von anderen Ordnungsanalysen, bei denen mehrere Werte des Zeitbereiches in mehrere Werte des Frequenzbereiches transformiert werden, dadurch, daß für jeden neuen gemessenen Eingangswert ein neuer Wert am Ausgang geliefert wird. Dies beruht im Wesentlichen auf den folgenden vereinfachenden Annahmen:

a) Die Annahme einer sich im Vergleich zur Störung langsam veränderlichen Fahrzeuggeschwindigkeit liefert hinreichend genaue Ergebnisse;

b) Die Abhängigkeit von der Fahrzeuggeschwindigkeit kann in eine Positionsabhängigkeit umgerechnet werden;

c) Die Integration über eine feste Zeit ist ausreichend genau.

Diese Näherungen reduzieren den Rechenaufwand erheblich und ermöglichen damit die Berechnung auf aktuellen Steuerrechnern in Echtzeit, wobei der Rechenaufwand einer schnellen Fourier Transformation (Fast Fourier Transformation, FFT) vermieden wird.

Ein Vorteil des vorstehend beschriebenen Verfahrens besteht darin, daß der Algorithmus in jedem Zeitschritt eine neue (verbesserte) Schätzung für Amplitude und Modellparameter liefern kann.

Ferner ist vorteilhaft, daß dadurch, daß die Amplituden der Störung nur in Relation zur Fahrzeuggeschwindigkeit (entlang einer Geraden) berücksichtigt werden, eine robustere Berechnung als bei anderen Lösungen gegeben ist, bei denen ein festes Frequenzband berücksichtigt wird.

Ferner ist vorteilhaft, daß durch die zusätzliche Klassifikation der Störung anhand einer für Fahrzeug und Störung charakteristischen Modellgleichung sich die Erkennung sehr robust gegenüber Parameter- oder Umwelteinflüssen verhält.

**Patentansprüche**

1. Verfahren zur Detektion periodischer Störungen in der Lenkeinrichtung eines Kraftfahrzeugs mit den Schritten:

- Ermitteln einer Geschwindigkeit des Kraftfahrzeugs,
- Ermitteln eines zeitlichen Verlaufs einer Lenkkraft und/oder eines Lenkmoments,
**gekennzeichnet durch** die Schritte:
- Ermittlung einer geschwindigkeitsabhängigen Zielfrequenz, die vorzugsweise der Rotationsfrequenz der Räder des Kraftfahrzeugs entspricht,
- Durchführung einer Fourier-Analyse des zeitlichen Verlaufs der Lenkkraft und/oder des Lenkmoments, wobei einer oder mehrere Frequenzbereiche bei der Fourier-Analyse nicht berücksichtigt werden, und wobei die Ober- und/oder die Untergrenze dieses Frequenzbereichs oder dieser Frequenzbereiche von der geschwindigkeitsabhängigen Zielfrequenz abhängen, und
- Detektion periodischer Störungen in der Lenkeinrichtung abhängig wenigstens von der durchgeführten Fourier-Analyse.

2. Verfahren nach Anspruch 1,
**dadurch gekennzeichnet, daß**
bei der Fourier-Analyse ausschließlich die erste Ordnung der Zielfrequenz und/oder ein oder mehrere höhere Ordnungen der Zielfrequenz berücksichtigt werden.

3. Verfahren nach Anspruch 1 oder 2,
**dadurch gekennzeichnet, daß**
zur Detektion der periodischen Störungen Amplituden ausgewertet werden, die aus mehreren Fourier-Analysen bei jeweils unterschiedlichen Fahrzeuggeschwindigkeiten gewonnen wurden.

4. Verfahren nach Anspruch 3,
**dadurch gekennzeichnet, daß**
zur Detektion der periodischen Störungen wenigstens eine geschwindigkeitsabhängige Modellgleichung mit wenigstens einem anpaßbaren Parameter vorgesehen ist, wobei der wenigstens eine anpaßbare Parameter mittels eines Regressionsverfahrens an die abhängig von der Geschwindigkeit aufgetragenen Amplituden aus der Fourier-Analyse für eine vorgegebene Ordnung angepaßt wird, und das Ausmaß und/oder die Art der periodischen Störung abhängig von dem wenigstens einen angepaßten Parameter bestimmt werden.

**5.** Verfahren nach einem der Ansprüche 1 bis 4,
**dadurch gekennzeichnet, daß**
die Fourier-Analyse mit der Vereinfachung ωτ= 2πC v(t)τ = 2πCs(τ) vorgenommen wird, wobei:

- ω die Kreisfrequenz [1/s],
- τ die Infinitesimalvariable [ ],
- C der reziproke Radumfang eines Kraftfahrzeugrads [1/m],
- *v(t)* die Momentangeschwindigkeit [m/s] ist und
- s(τ) die mittlere Wegstrecke [m] pro Meßzeitabschnitt ist.

**6.** Verfahren nach Anspruch 5,
**dadurch gekennzeichnet, daß**
eine Integration von Fourier-Koeffizienten durch eine Näherung nach dem Trapezverfahren vorgenommen wird, bei dem eine Anzahl von Stützstellen N gemäß der Gleichung $N=T_{max}/T_s]=[1/(C \cdot v_{min} T_s]$ in Abhängigkeit von der Integrationszeit T [s], der Abtastzeit $T_s$[s] und der maximalen Integrationszeit $T_{max}$ [s] gewählt wird.

**7.** Verfahren nach einem der Ansprüche 3 bis 6,
**dadurch gekennzeichnet, daß**
eine Anpassung der über der Geschwindigkeit aufgetragenen Amplituden aus der Fourier-Analyse anhand einer Modellgleichung gemäß

$$\hat{A}_k = a_k \cdot \sqrt{\frac{\Omega^2(1 + 4d_k^2 \cdot \Omega^2)}{(\Omega^2 - 1)^2 + 4d_k^2 \cdot \Omega^2}}$$

mit $\Omega = v(t_i)/v_k$ vorgenommen wird.

**8.** Verfahren nach Anspruch 7,
**dadurch gekennzeichnet, daß**
die Parameter $v_k$ und $d_k$ vorgegebene, fahrzeugspezifische Parameter sind, und daß der Parameter $a_k$ aus einer Anpassung der Modellgleichung an die bei der Fourier-Analyse bestimmten Amplituden $A_k (t_i)$ nach einer Methode der kleinsten Fehlerquadrate ermittelt wird.

**9.** Verfahren zur Kompensation periodischer Störungen in der Lenkeinrichtung eines Kraftfahrzeuges mit einer fremdunterstützten Lenkeinrichtung,
**gekennzeichnet durch** die Schritte

- Detektion einer periodischen Störung in der Lenkeinrichtung entsprechend einem Verfahren nach einem der Ansprüche 1 bis 8,
- Einwirkung auf die Fremdunterstützung der Lenkeinrichtung abhängig von der detektierten periodischen Störung zu deren Kompensation.

**10.** Lenkeinrichtung mit Fremdkraftunterstützung,
**gekennzeichnet durch**
ein Steuergerät, welches für die Durchführung eines Verfahrens nach einem der Ansprüche 1 bis 8 und/oder 9 eingerichtet ist.

**Claims**

**1.** Method for the detection of periodic disturbances in the steering device of a motor vehicle, having the steps:

- determining a speed of the motor vehicle,
- determining a time profile of a steering force and/or of a steering torque,

**characterized by** the steps:

- determining a speed-dependent target frequency which preferably corresponds to the rotational frequency of the wheels of the motor vehicle,
- carrying out a Fourier analysis of the time profile of the steering force and/or of the steering torque, with one or more frequency ranges not being taken into consideration in the Fourier analysis, and with the upper and/or lower limit of said frequency range or of said frequency ranges being dependent on the speed-dependent target frequency, and
- detecting periodic disturbances in the steering device as a function at least of the Fourier analyses carried out.

2. Method according to Claim 1,
**characterized in that**
in the Fourier analysis, only the first order of the target frequency and/or one or more higher orders of the target frequency are taken into consideration.

3. Method according to Claim 1 or 2,
**characterized in that**
in order to detect the periodic disturbances, amplitudes are evaluated which have been obtained from a plurality of Fourier analyses at in each case different vehicle speeds.

4. Method according to Claim 3,
**characterized in that**
in order to detect the periodic disturbances, at least one speed-dependent model equation having at least one adaptable parameter is provided, with the at least one adaptable parameter being adapted by means of a regression method to the amplitudes, which are plotted as a function of the speed, from the Fourier analysis for a predefined order, and the extent and/or the type of periodic disturbance are determined as a function of the at least one adapted parameter.

5. Method according to one of Claims 1 to 4,
**characterized in that**
the Fourier analysis is carried out with the simplification $\omega = 2\pi C\, v(t)\tau \approx 2\pi C s(\tau)$, where:

- $\omega$ is the angular frequency [1/s],
- $\tau$ is the infinitesimal variable [],
- C is the reciprocal wheel circumference of a motor vehicle wheel [1/m],
- $v(t)$ is the instantaneous speed [m/s] and
- $s(\tau)$ is the mean distance [m] per measurement time section.

6. Method according to Claim 5,
**characterized in that**
an integration of Fourier coefficients is carried out by means of an approximation according to the trapezoid method, in which a number of nodes N is selected according to the equation $N = [T_{max}/T_s] = [1/(C \cdot v_{min} T_s)]$ as a function of the integration time T [s], the sampling interval $T_s$ [s] and the maximum integration time $T_{max}$ [s] .

7. Method according to one of Claims 3 to 6,
**characterized in that**
an adaptation of the amplitudes, which are plotted against the speed, from the Fourier analysis is carried out on the basis of a model equation according to

$$\hat{A}_k = a_k \cdot \sqrt{\frac{\Omega^2(1 + 4d_k^2 \cdot \Omega^2)}{(\Omega^2 - 1)^2 + 4d_k^2 \cdot \Omega^2}}$$

where $\Omega = v(t_i)/v_k$.

8. Method according to Claim 7,
**characterized in that**
the parameters $v_k$ and $d_k$ are predefined, vehicle-specific parameters, and **characterized in that** the parameter $a_k$ is determined from an adaptation of the model equation to the amplitudes $A_k(t_i)$ determined in the Fourier analysis according to a least square errors method.

9. Method for the compensation of periodic disturbances in the steering device of a motor vehicle with a power-assisted steering device,
   **characterized by** the steps:

   - detecting a periodic disturbance in the steering device corresponding to a method as per one of Claims 1 to 8,
   - acting on the power assistance of the steering device as a function of the detected periodic disturbance in order to compensate the latter.

10. Steering device with power assistance,
    **characterized by**
    a control unit which is set up to carry out a method according to one of Claims 1 to 8 and/or 9.

**Revendications**

1. Procédé de détection de perturbations périodiques dans le système de direction d'un véhicule automobile, comprenant les étapes suivantes :

   - détermination d'une vitesse du véhicule automobile,
   - détermination d'une allure dans le temps d'une force de direction et/ou d'un couple de direction,

   **caractérisé par** les étapes suivantes :

   - détermination d'une fréquence cible dépendant de la vitesse, qui correspond de préférence à la fréquence de rotation des roues du véhicule automobile,
   - mise en oeuvre d'une analyse de Fourier de l'allure dans le temps de la force de direction et/ou du couple de direction, une ou plusieurs plages de fréquences n'étant pas prises en compte dans l'analyse de Fourier, et la limite supérieure et/ou la limite inférieure de cette plage de fréquences ou de ces plages de fréquences dépendant de la fréquence cible dépendant de la vitesse, et
   - détection de perturbations périodiques dans le système de direction au moins en fonction de l'analyse de Fourier effectuée.

2. Procédé selon la revendication 1,
   **caractérisé en ce que**
   lors de l'analyse de Fourier, seulement le premier ordre de la fréquence cible et/ou un ou plusieurs ordres supérieurs de la fréquence cible sont considérés.

3. Procédé selon la revendication 1 ou 2,
   **caractérisé en ce que**
   pour la détection des perturbations périodiques, on analyse des amplitudes qui ont été obtenues à partir de plusieurs analyses de Fourier pour les différentes vitesses respectives du véhicule.

4. Procédé selon la revendication 3,
   **caractérisé en ce que**
   pour la détection des perturbations périodiques, on prévoit au moins une équation de modélisation dépendant de la vitesse, avec au moins un paramètre adaptable, l'au moins un paramètre adaptable étant adapté au moyen d'un procédé de régression aux amplitudes enregistrées en fonction de la vitesse à partir de l'analyse de Fourier pour un ordre prédéfini, et l'ampleur et/ou le type de perturbation périodique sont déterminés en fonction de l'au moins un paramètre adapté.

5. Procédé selon l'une quelconque des revendications 1 à 4,
   **caractérisé en ce que**
   l'analyse de Fourier est effectuée avec la simplification suivante : $\omega\tau = 2nC\ v(t)\ \tau \cong 2\pi C\ s(\tau)$,

   - $\omega$ étant la fréquence de boucle [1/s],
   - $\tau$ étant la variable infinitésimale [ ],

- C étant le pourtour réciproque de roue d'une roue de véhicule automobile [1/m],
- v(t) étant la vitesse instantanée [m/s] et
- s($\tau$) étant la distance parcourue moyenne [m] par intervalle de temps mesuré.

6. Procédé selon la revendication 5,
**caractérisé en ce que**
l'on effectue une intégration de coefficients de Fourier par une approximation selon la méthode des trapèzes, dans laquelle un nombre de points de support N est sélectionné conformément à l'équation N=[$T_{max}/T_s$] - [1/($C.V_{min}T_s$)] en fonction du temps d'intégration T[s], du temps de balayage $T_s$ [s] et du temps d'intégration maximum $T_{max}$ [s].

7. Procédé selon l'une quelconque des revendications 3 à 6,
**caractérisé en ce que**
l'on effectue une adaptation des amplitudes enregistrées sur la vitesse à partir de l'analyse de Fourier à l'aide d'une équation de modélisation comme suit :

$$\hat{A}_k = a_k \cdot \sqrt{\frac{\Omega^2\left(1+4d_k^2 \cdot \Omega^2\right)}{\left(\Omega^2-1\right)^2 + 4d_k^2 \cdot \Omega^2}}$$

avec Q = v ($t_i/v_k$.

8. Procédé selon la revendication 7,
**caractérisé en ce que**
les paramètres $v_k$ et $d_k$ sont des paramètres prédéfinis spécifiques au véhicule, et **en ce que** le paramètre $a_k$ est déterminé à partir d'une adaptation de l'équation de modélisation à des amplitudes $A_k$ ($t_i$) déterminées lors de l'analyse de Fourier, conformément à la méthode des moindres carrés.

9. Procédé de compensation des perturbations périodiques dans le système de direction d'un véhicule automobile, comprenant un système de direction assisté par l'extérieur,
**caractérisé par** les étapes suivantes :

- détection d'une perturbation périodique dans le système de direction en fonction d'un procédé selon l'une quelconque des revendications 1 à 8,
- intervention sur l'assistance extérieure du système de direction en fonction de la perturbation périodique détectée en vue de la compenser.

10. Système de direction à assistance par force extérieure,
**caractérisé par**
un appareil de commande qui est prévu pour mettre en oeuvre un procédé selon l'une quelconque des revendications 1 à 8 et/ou 9.

**Fig. 1**

**Fig. 2**

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2004161073 B